Europäisches Patentamt

European Patent Office

Office européen des brevets

(19)

(11) Veröffentlichungsnummer : **0 133 865**
**B1**

(12) **EUROPÄISCHE PATENTSCHRIFT**

(45) Veröffentlichungstag der Patentschrift :
**19.08.87**

(21) Anmeldenummer : **84104282.3**

(22) Anmeldetag : **16.04.84**

(51) Int. Cl.⁴ : **B 60 T 11/10**, B 62 D 11/08,
F 15 B 9/08

(54) **Geberzylinder.**

(30) Priorität : **12.08.83 DE 3329143**

(43) Veröffentlichungstag der Anmeldung :
**13.03.85 Patentblatt 85/11**

(45) Bekanntmachung des Hinweises auf die Patenterteilung : **19.08.87 Patentblatt 87/34**

(84) Benannte Vertragsstaaten :
**AT DE FR GB IT**

(56) Entgegenhaltungen :
**DE-A- 2 321 545**
**DE-A- 2 909 279**
**DE-B- 2 153 785**

(73) Patentinhaber : **WABCO Westinghouse Fahrzeugbremsen GmbH**
**Am Lindener Hafen 21 Postfach 91 12 80**
**D-3000 Hannover 91 (DE)**

(72) Erfinder : **Staisch, Diether**
**Sunderstrasse 108**
**D-3030 Walsrode 1 (DE)**

(74) Vertreter : **Schrödter, Manfred**
**WABCO Westinghouse Fahrzeugbremsen GmbH Am
Lindener Hafen 21 Postfach 91 12 80**
**D-3000 Hannover 91 (DE)**

Jouve, 18, rue St-Denis, 75001 Paris, France

**Beschreibung**

Die Erfindung betrifft einen Geberzylinder für die Aussteuerung von Druckmittel zur Betätigung von Druckmittelverbrauchern, insbesondere Fahrzeugbremszylindern, gemäß dem Oberbegriff des Patentanspruchs 1.

Ein Geberzylinder der eingangs genannten Art ist aus der DE-OS 30 06 610 bekannt. Das von einem solchen Geberzylinder ausgesteuerte Druckmittel ist auf die Versorgung eines Verbrauchers bzw. Verbrauchergruppe, beispielsweise zur Betätigung von Radbremszylindern zum Zwecke einer Fahrzeugbremsung, begrenzt. Eine Druckmittelaussteuerung zur wahlweisen Einzel- oder Gesamtversorgung eines ersten und zweiten Verbrauchers bzw. einer Verbrauchergruppe, beispielsweise zur wahlweisen Betätigung von Radbremszylindern einer Fahrzeugseite oder beider Fahrzeugseiten zum Zwecke einer Betriebs- oder Lenkbremsung ist nicht möglich.

Eine für solche Anwendungsgebiete geeignete Geberzylindereinrichtung ist aus der DE-OS 21 53 785 bekannt. Die Geberzylindereinrichtung ist mit einem ersten und einem zweiten Geberzylinder aufgebaut, deren Betätigungsglieder bei gemeinsamer Betätigung miteinander verriegelbar sind. Zwischen dem ersten und dem zweiten Geberzylinder ist ein Ausgleichszylinder angeordnet, welcher die Kammern der beiden Geberzylinder bei gemeinsamer Betätigung miteinander verbindet und bei Einzelbetätigung voneinander trennt, so daß bei Einzelbetätigung lediglich an dem Verbraucherauslaß des betätigten Geberzylinders und bei gemeinsamer Betätigung an dem Verbraucherauslaß des ersten und zweiten Geberzylinders ein untereinander ausgeglichener Druck aussteuerbar ist. Dabei ist nachteilig, daß die drei Zylinder aufweisende Geberzylindereinrichtung zu raum- und materialaufwendig ist.

Der Erfindung liegt somit die Aufgabe zugrunde, einen Geberzylinder der eingangs erwähnten Art zu schaffen, welcher bei einer einfachen, raumsparenden und zugleich kompakten Bauweise eine Druckmittelaussteuerung zur wahlweisen Einzel- und druckausgeglichenen Gesamtversorgung eines ersten und zweiten Verbrauchers bzw. einer Verbrauchergruppe ermöglicht.

Diese Aufgabe wird durch die in dem Patentanspruch 1 angegebene Erfindung gelöst. Weiterbildungen und vorteilhafte Ausgestaltungen der Erfindung sind in den Unteransprüchen aufgezeigt.

Die Vorteile der Erfindung bestehen u. a. darin, daß ein einzelner, mit zwei Betätigungsgliedern versehener Geberzylinder aufgezeigt ist, mit welchem bei Betätigung eines Betätigungsgliedes an einem ersten oder zweiten, durch die Wahl des Betätigungsgliedes vorbestimmten Verbraucherauslaß eine Druckmittelaussteuerung, beispielsweise zur Betätigung von Radbremszylinder einer Fahrzeugseite zwecks Lenkbremsung und bei gemeinsamer Betätigung beider Betätigungsglieder an dem ersten und zweiten Verbraucherauslaß eine untereinander druckausgeglichene Druckmittelaussteuerung, beispielsweise zur Betätigung von Radbremszylindern beider Fahrzeugseiten zum Zwecke einer Fahrzeugbremsung, gewährleistet wird.

Durch die aufgezeigte Anordnung der Auslaßverbindungen, der diesen Auslaßverbindungen zugeordneten Schließkörper, der mit den Schließkörpern zusammenwirkenden Stößel und der zur Betätigung der Stößel und des Geberkolbens vorgesehenen Betätigungsglieder wird unter Vermeidung eines zweiten Geberzylinders und nachgeschalteter Ausgleichs- und Sperrmittel eine für den Fahrzeugbau besonders interessante einfache, raum- und materialsparende sowie zugleich kompakte Bauweise des Geberzylinders erreicht, welcher seinerseits mit seinen beiden, zweckmäßigerweise an dem Zylindergehäuse angeordneten Verbraucherauslässen einfach installierbar und gegebenenfalls schnell auswechselbar ist.

Durch die vorgeschlagenen konisch erweiterten Endbereiche der Längsbohrungen des Geberkolbens wird erreicht, daß die Betätigungsglieder bei stangenförmiger und stößelseitig balliger Ausbildung auf einfache Weise mit radialem Spiel betätigbar in dem Geberkolben gelagert werden können, was bei Pedalbetätigung äußerst vorteilhaft ist. Wenn ein solches radiales Betätigungsspiel, beispielsweise bei handbetätigung, nicht erforderlich ist, wird hingegen eine äußerst einfache Bauweise mit der alternativ vorgeschlagenen einstückigen Ausbildung jedes Stößels mit dem ihm zugeordneten Betätigungsglied ermöglicht.

Durch das vorgeschlagene Verriegelungsglied können die beiden Betätigungsglieder auf einfache Weise zuverlässig miteinander verriegelt werden, wenn bei bestimmten Anwendungen die Betätigung nur eines Betätigungsgliedes, beispielsweise zur Vermeidung einer Lenkbremsung im Straßenverkehr, ausgeschlossen werden soll.

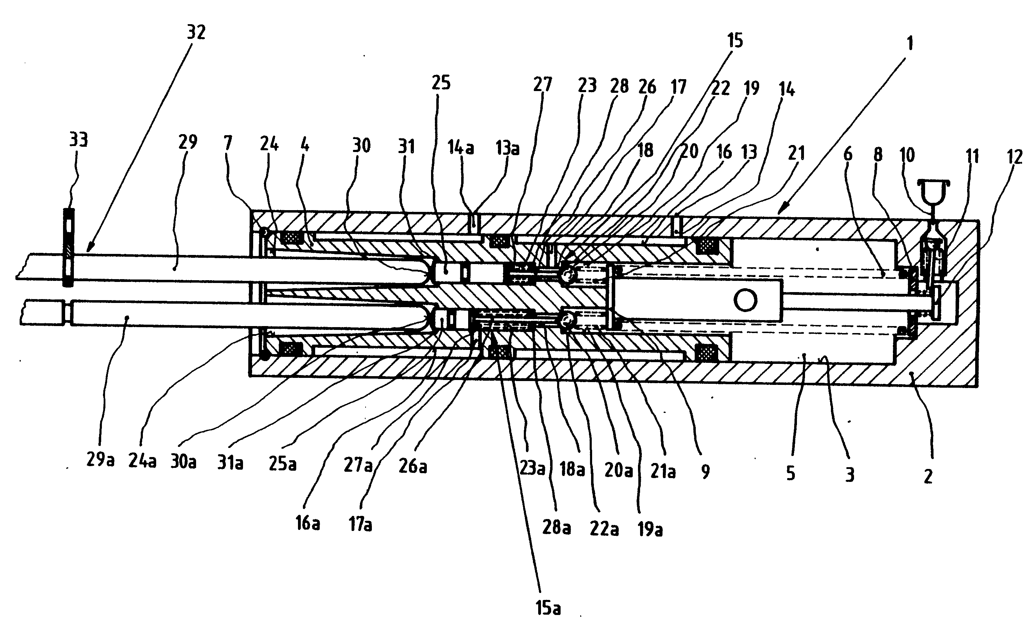

Die Erfindung wird nachfolgend anhand eines in der Zeichnung dargestellten Ausführungsbeispiels beschrieben.

Die in der Zeichnung dargestellte Figur zeigt einen Längsschnitt durch einen Geberzylinder.

Der dargestellte Geberzylinder 1 weist ein Zylindergehäuse 2 mit einer einseitig geschlossenen Zylinderbohrung 3 auf.

In der Zylinderbohrung 3 ist ein Geberkolben 4 abgedichtet und gleitend verschiebbar angeordnet, welcher eine in der Zylinderbohrung 3 gebildete Kammer 5 begrenzt.

Der Geberkolben 4 liegt in seiner unbetätigten Ausgangsstellung unter der Kraft einer Rückhol-Feder 6 an einem Anschlag 7 an, welcher an dem Zylindergehäuse 2 gebildet ist. Die Rückhol-Feder 6 ist in der Kammer 5 angeordnet und stützt sich an einem Ende über eine Ringscheibe 8 bodenseitig in der Kammer 5 und an dem anderen Ende über einen an einem Topf angeformten Federteller 9 stirnseitig an dem Geberkolben 4 ab.

An dem Zylindergehäuse 2 ist ein mit der Kammer 4 verbundener Nachlaufanschluß 10 angeordnet, welcher mit einem nur symbolisch dargestellten Nachlaufbehälter in Verbindung steht. Dem Nachlaufanschluß 10 ist ein gegen die Nachlaufrichtung federbelastet schließendes Kippventil 11 zugeordnet, welches in der Ausgangsstellung des Geberkolbens 4 über einen elastisch mit dem Geberkolben 4 verbundenen und durch die Ringscheibe 8 greifenden Betätigungsbolzen 12 in Offenstellung gehalten ist.

An dem Zylindergehäuse 2 sind ein erster Verbraucherauslaß 13 und ein zweiter Verbraucherauslaß 13a angeordnet, welche jeweils über eine in dem Zylindergehäuse 2 eingebrachte Bohrung 14 bzw. 14a und eine in dem Geberkolben 4 gegebene Auslaßverbindung 15 bzw. 15a mit der Kammer 5 verbunden sind.

Die beiden Auslaßverbindungen 15 und 15a sind jeweils durch eine mit der Bohrung 14 bzw. 14a verbundene Ringnut 16 bzw. 16a, eine in die Ringnut 16 bzw. 16a einmündende Querbohrung 17 bzw. 17a und eine die Querbohrung 17 bzw. 17a mit der Kammer 5 verbindende Längsbohrung 18 bzw. 18a des Geberkolbens 4 gebildet.

Jede der beiden Längsbohrungen 18 bzw. 18a weist kammerseitig einen nach außen abgestuften Endbereich 19 bzw. 19a auf, in welchem ein kugelförmiger Schließkörper 20 bzw. 20a verschiebbar angeordnet ist.

An der Abstufung jedes Endbereiches 19 und 19a ist eine Schulter 22 bzw. 22a gebildet, an welcher der Schließkörper 20 bzw. 20a bei Anlage unter der Wirkung des Druckes in der Kammer 5 und der Kraft einer über den Federteller 9 geberkolbenseitig abgestützten Schließ-Feder 21 bzw. 21a dicht schließt.

Die beiden Längsbohrungen 18 und 18a weisen jeweils zwischen der einmündenden Querbohrung 17 bzw. 17a und dem freien Ende einen nach außen abgestuften Mittelbereich 23 bzw. 23a auf, welchem sich ein nach außen abgestufter und zum freien Ende konisch erweiterter Endbereich 24 bzw. 24a anschließt.

In den beiden Mittelbereichen 23 und 23a ist jeweils ein Stößel 25 bzw. 25a abgedichtet und gleitend verschiebbar angeordnet. Jeder Stößel 25 bzw. 25a weist kammerseitig eine in die Längsbohrung 18 bzw. 18a niederen Durchmessers eingreifende, stiftförmige Verlängerung 26 bzw. 26a auf, über welche der in dem abgestuften Endbereich 19 bzw. 19a angeordnete Schließkörper 20 bzw. 20a gegen die Kraft der Schließ-Feder 21 bzw. 21a in Offenstellung bewegbar ist. Jeder Stößel 25 bzw. 25a ist gegen die Kraft einer Rückstellfeder 27 bzw. 27a betätigbar, welche sich an einem Ende an einer an der Abstufung des Mittelbereiches 23 bzw. 23a gebildeten Schulter 28 bzw. 28a und an dem anderen Ende stirnseitig an dem Stößel 25 bzw. 25a abstützt, so daß der unbetätigte Stößel 25 bzw. 25a eine Ausgangsstellung aufweist, in welcher dieser mit seinem der Rückstellfeder 27 bzw. 27a abgewandten Ende in den konisch erweiterten Endbereich 24 bzw. 24a eingreift.

In den beiden konisch erweiterten Endbereichen 24 und 24a ist jeweils ein Betätigungsglied 29 bzw. 29a verschiebbar eingreifend angeordnet, welches mit einer stirnseitig gegebenen Anlagefläche 30 bzw. 30a an dem Stößel 25 bzw. 25a anliegt und in seiner Verschiebbarkeit durch einen an der Abstufung der konisch erweiterten Endbereiches 24 bzw. 24a gebildeten Anschlag 31 bzw. 31a begrenzt ist.

Die beiden Betätigungsglieder 29 und 29a sind wenigstens im Bereich ihres Eingriffes in den jeweiligen konisch erweiterten Endbereich 24 bzw. 24a stangenförmig und im Bereich ihrer strinseitigen Anlageflächen 30 und 30a ballig ausgebildet, so daß die Betätigungsglieder 29 und 29a in dem Geberkolben 4 schwenkbar gelagert und mit radialem Spiel betätigbar sind.

Die beiden Betätigungsglieder 29 und 29a sind einer Betätigungseinrichtung 32 zugeordnet, welche bekanntermaßen beispielsweise nicht dargestellte Pedale aufweist, so daß die Betätigungsglieder 29 und 29a einzeln oder gemeinsam betätigbar sind, wobei mit jedem Betätigungsglied 29 und 29a zunächst der an dem jeweiligen Betätigungsglied 29 bzw. 29a anliegende Stößel 25 bzw. 25a und bei Anlage des Betätigungsgliedes 29 bzw. 29a an dem Anschlag 31 bzw. 31a der Geberkolben 4 betätigbar sind.

Die Betätigungseinrichtung 32 weist ein an einem Betätigungsglied 29 oder 29a schwenkbar gelagertes Verriegelungsglied 33 auf, mit welchem die beiden Betätigungsglieder 29 und 29a bei gemeinsamer Betätigung gegeneinander axial unverschieblich verriegelbar sind.

Die Wirkungsweise des soweit beschriebenen Geberzylinders 1 ist wie folgt :

Der Geberzylinder 1 ist in seiner bei unbetätigten Betätigungsgliedern 29 und 29a gegebenen Ausgangsstellung dargestellt. Dabei nimmt jeder Stößel 25 und 25a seine zuvor beschriebene Ausgangsstellung ein, in welcher dieser unter der Kraft der Rückstellfeder 27 bzw. 27a stirnseitig an dem Betätigungsglied 29 bzw. 29a anliegend in den konisch erweiterten Endbereich 24 bzw. 24a der Längsbohrung 18 bzw. 18a eingreift.

Je nach Einstellung der Betätingungsglieder 29 und 29a steht jede stiftförmige Verlängerung 26 bzw. 26a entweder unmittelbar vor dem Schließkörper 20 bzw. 20a an, so daß dieser federbelastet schließt oder die stiftförmige Verlängerung 26 bzw. 20a liegt an dem Schließkörper 20 bzw. 20a an, so daß dieser mit geringem Abstand vor der Schulter 22 bzw. 22a gegen die Kraft der Schließ-Feder 21 bzw. 21a in Offenstellung gehalten ist. Der Geberkolben 4 liegt unter der Kraft der Rückhol-Feder 6 an dem Anschlag 7 an und hält das Kippventil 11 über den Betätigungsbolzen 12 in Offenstellung, so daß druckloses Druckmittel über den Nachlaufanschluß 10 in die Kammer 5 nachlaufen kann.

Der Geberzylinder 1 kann mit einem der beiden Betätigungsglieder 29 bzw. 29a zur Aussteuerung von Druckmittel an einem durch die Wahl des Betätingungsgliedes 29 oder 29a vorbestimmten Verbraucherauslaß 13 oder 13a oder mit beiden Betätigungsgliedern 29 und 29a gemeinsam zur untereinander druckausgeglichenen Ansteuerung von Druckmittel an dem ersten und zweiten Verbraucherauslaß 13 und 13a betätigt werden.

Bei Betätigung eines der beiden Betätigungsglieder 29 bzw. 29a, beispielsweise des Betätigungsgliedes 29, verschiebt sich dieses Betätigungsglied 29 zunächst in dem konisch erweiterten Endbereich 24 in Richtung auf den Anschlag 31 und betätigt den an seiner Anlagefläche 30 stirnseitig anliegenden Stößel 25 gegen die Kraft der Rückstellfeder 27. Dabei bewegt der Stößel 25 mit seiner stiftförmigen Verlängerung 26 den Schließkörper 20 gegen die Kraft der Feder 21, so daß der Schließkörper 20 in Offenstellung gehalten wird. Sobald das Betätigungsglied 29 stirnseitig an dem Anschlag 31 anliegt, betätigt das Betätigungsglied 31 den Geberkolben 4 gegen die Kraft der Feder 6, wobei das unbetätigte Betätigungsglied 29a, und der federbelastet daran anliegende Stößel 25a in ihrer Ausgangsstellung zurückbleiben. Dabei geben der Betätigungsbolzen 12 des Geberkolbens 4 das Kippventil 11 und die stiftförmige Verlängerung des unbetätigten Stößels 25a den Schließkörper 20a frei, so daß das Kippventil 11 den Nachlaufanschluß 10 und der Schließkörper 20a die Auslaßverbindung 15a zum zweiten Verbraucherauslaß 13a federbelastet und unter der Wirkung des in der Kammer 5 gegebenen Druckes sperren und sodann Druckmittel von dem Geberkolben 4 über die entsperrte Auslaufverbindung 15 an dem ersten Verbraucherauslaß 13 ausgesteuert wird.

Bei Betätigung des anderen Betätigungsgliedes 29a unterscheidet sich die Wirkungsweise lediglich darin, daß nunmehr der andere Schließkörper 20a von dem anderen Stößel 25a in Offenstellung bewegt und mit dem Geberkolben 4 über die entsperrte andere Auslaßverbindung 15a Druckmittel an dem zweiten Verbraucherauslaß 13a ausgesteuert wird.

Bei gemeinsamer Betätigung beider Betätigungsglieder 29 und 29a werden in zuvor beschriebener Weise beide Stößel 25 und 25a betätigt und somit beide Schließkörper 20 und 20a in Offenstellung bewegt, so daß mit dem Geberkolben 4 über die beiden entsperrten Auslaßverbindungen 15 und 15a Druckmittel an dem ersten und zweiten Verbraucherauslaß 13 und 19a untereinander druckausgeglichen ausgesteuert wird.

Wenn beispielsweise an dem ersten Verbraucherauslaß 13 nicht dargestellte Radbremslinder einer Fahrzeugseite und an dem zweiten Verbraucherauslaß 13a ebenfalls nicht dargestellte Radbremszylinder der anderen Fahrzeugseite angeschlossen werden, kann in zuvor beschriebener Weise bei Betätigung eines Betätigungsgliedes 29 bzw. 29a Druckmittel zur Betätigung der Radbremszylinder einer durch die Wahl des Betätigungsgliedes 29 oder 29a vorbestimmten Fahrzeugseite zum Zwecke einer Lenkbremsung oder bei gemeinsamer Betätigung beider Betätigungsglieder 29 und 29a Druckmittel zur Betätigung der Radbremszylinder beider Fahrzeugseiten zum Zwecke einer Fahrzeugbremsung ausgesteuert werden.

Die beiden Betätigungsglieder 29 und 29a sind bei gemeinsamer Betätigung durch Einschwenken des Verriegelungsgliedes 33 gegeneinander axial unverschieblich verriegelbar, wenn bei bestimmten Anwendungen die Aussteuerung von Druckmittel an nur einem Verbraucherauslaß 13 oder 13a — beispielsweise zur Vermeidung von Lenkbremsungen im Straßenverkehr durch Fehlbetätigung — ausgeschlossen werden soll.

**Patentansprüche**

1. Geberzylinder (1) für die Aussteuerung von Druckmittel zur Betätigung von Druckmittelverbrauchern, insbesondere Fahrzeugbremszylinder, mit

a) einem Zylindergehäuse (2), welches eine einzige, einseitig geschlossene Zylinderbohrung (3) aufweist,

b) einem in der Zylinderbohrung (3) abgedichtet und gleitend verschiebbaren Geberkolben (4), welcher eine in der Zylinderbohrung (3) gebildete Kammer (5) begrenzt,

c) einer Betätigungseinrichtung (32), mit welcher der Geberkolben (4) gegen die Kraft einer Rückhol-Feder (6) betätigbar ist,

d) einem mit der Kammer (5) verbundenen Nachlaufanschluß (10), welcher bei Betätigung des Geberkolbens (4) absperrbar ist,

e) einem mit der Kammer (5) verbundenen, ersten Verbraucherauslaß (13),
dadurch gekennzeichnet, daß

f) der Geberzylinder (1) einen zweiten Verbraucherauslaß (13a) aufweist,

g) der erste und der zweite Verbraucherauslaß (13 und 13a) über jeweils eine in dem Geberkolben (4) gebildete Auslaßverbindung (15 bzw. 15a) mit der Kammer (5) verbunden sind,

h) jeder Auslaßverbindung (15 und 15a) ein Schließkörper (20 bzw. 20a) zugeordnet ist, welcher diese Auslaßverbindung (15 bzw. 15a) unter der Kraft einer Schließ-Feder (21 bzw. 21a) und/oder der Wirkung des in der Kammer (5) gegebenen Druckes in Auslaßrichtung sperrt,

i) jedem Schließkörper (20 und 20a) ein in dem Geberkolben (4) abgedichtet und gleitend verschiebbar angeordneter Stößel (25 bzw. 25a) zugeordnet ist, mit welchem der Schließkörper (20 bzw. 20a) in Offenstellung bewegbar ist,

j) jedem Stößel (25 bzw. 25a) ein Betätigungsglied (29 bzw. 29a) zugeordnet ist, mit welchem der Stößel (25 bzw. 25a) solange verschiebbar ist, bis das Betätigungsglied (29 bzw. 29a) an einem an dem Geberkolben (4) gebildeten Anschlag (31 bzw. 31a) anliegt,

k) die Betätingungsglieder (29 und 29a) von der Betätigungseinrichtung (32) derart beaufschlagbar sind, daß erstere einzeln oder gemeinsam und der Geberkolben (4) über jedes Betätigungsglied (29 bzw. 29a) und den diesem zugeordneten Anschlag (31 bzw. 31a) betätigbar sind.

2. Geberzylinder nach dem Anspruch 1, dadurch gekennzeichnet, daß der erste und der zweite Verbraucherauslaß (13 und 13a) an dem Zylindergehäuse (2) angeordnet und jeweils über eine in dem Zylindergehäuse (2) eingebrachte Bohrung (14 bzw. 14a) mit einer der beiden Auslaßverbindungen (15 bzw. 15a) verbunden sind.

3. Geberzylinder nach dem Anspruch 2, dadurch gekennzeichnet, daß die Auslaßverbindungen (15 und 15a) jeweils durch eine mit der Bohrung (14 bzw. 14a) des Zylindergehäuses (2) verbundene Ringnut (16 bzw. 16a), eine in die Ringnut (16 bzw. 16a) einmündende Querbohrung (17 bzw. 17a) und eine die Querbohrung (17 bzw. 17a) mit der Kammer (5) verbindende Längsbohrung (18 bzw. 18a) gebildet sind.

4. Geberzylinder nach dem Anspruch 3, dadurch gekennzeichnet, daß jede Längsbohrung (18 und 18a) kammerseitig einen nach außen abgestuften Endbereich (19 bzw. 19a) aufweist, in welchem der Schließkörper (20 bzw. 20a) verschiebbar und bei Anlage an einer an der Abstufung des Endbereiches (19 bzw. 19a) gebildeten Schulter (22 bzw. 22a) unter der Wirkung des in der Kammer (5) gegebenen Druckes und unter der Kraft der Schließ-Feder (21 bzw. 21a) dicht schließend angeordnet ist.

5. Geberzylinder nach einem der Ansprüche 1 oder 4, dadurch gekennzeichnet, daß die Schließ-Federn (21 und 21a) geberkolbenseitig abgestützt sind.

6. Geberzylinder nach einem der Ansprüche 1, 4 oder 5, dadurch gekennzeichnet, daß die Schließkörper (20 und 20a) kugelförmig ausgebildet sind.

7. Geberzylinder nach einem der Ansprüche 3 oder 4, dadurch gekennzeichnet, daß

a) jede Längsbohrung (18 und 18a) zwischen der einmündenden Querbohrung (17 bzw. 17a) und dem freien Ende einen nach außen abgestuften Mittelbereich (23 bzw. 23a) aufweist, in welchem der Stößel (25 bzw. 25a) angeordnet ist,

b) jeder Stößel (25 und 25a) kammerseitig eine in die Längsbohrung (18 bzw. 18a) eingreifende, stiftförmige Verlängerung (26 bzw. 26a) aufweist, über welche der Schließkörper (20 bzw. 20a) gegen die Kraft der Schließ-Feder (21 bzw. 21a) in Offenstellung bewegbar ist,

c) jede Längsbohrung (18 und 18a) einen sich an den Mittelbereich (23 bzw. 23a) nach außen abgestuft anschließenden und zum freien Ende konisch erweiterten Endbereich (24 bzw. 24a) aufweist, in welchem das Betätigungsglied (29 bzw. 29a) verschiebbar eingreifend und mit einer Anlagefläche (30 bzw. 30a) stirnseitig an dem Stößel (25 bzw. 25a) anliegend angeordnet ist,

d) jedem Stößel (25 und 25a) eine sich einerseits und einer an der Abstufung des Mittelbereiches (23 bzw. 23a) gebildeten Schulter (28 bzw. 28a) und andererseits stirnseitig an dem Stößel (25 bzw. 25a) abstützende Rückstellfeder (27 bzw. 27a) zugeordnet ist, welche den unbetätigten Stößel (25 bzw. 25a) in einer Ausgangsstellung hält, in welcher dieser mit seinem an dem Betätigungsglied (29 bzw. 29a) anliegenden Ende in den konisch erweiterten Endbereich (24 bzw. 24a) eingreift,

e) an der Abstufung jedes konisch erweiterten Endbereiches (24 bzw. 24a) der Anschlag (31 bzw. 31a) gebildet ist, welcher die Verschiebbarkeit des Betätigungsgliedes (29 bzw. 29a) in dem konisch erweiterten Endbereich (24 bzw. 24a) stößelseitig begrenzt.

8. Geberzylinder nach dem Anspruch 7, dadurch gekennzeichnet, daß die Betätigungsglieder (29 und 29a) wenigstens im Eingriffsbereich des Geberkolbens (4) stangenförmig und im Bereich der stößelseitigen Anlageflächen (30 und 30a) ballig ausgebildet sind.

9. Geberzylinder nach einem der Ansprüche 1 bis 7, dadurch gekennzeichnet, daß jeder Stößel (25 und 25a) mit dem ihm zugeordneten Betätigungsglied (29 bzw. 29a) einstückig ausgebildet ist.

10. Geberzylinder nach einem der Ansprüche 1 bis 9, dadurch gekennzeichnet, daß die Betätigungseinrichtung (32) ein Verriegelungsglied (33) aufweist, mit welchem die Betätigungsglieder (29 bzw. 29a) zur gemeinsamen Betätigung miteinander verriegelbar sind.

**Claims**

1. Master cylinder (1) for supplying pressure medium for operating pressure-medium receivers, especially vehicle brake cylinders, having

a) a cylinder housing (2) having a single cylinder bore (3) which is closed at one end,

b) a master piston (4) which is movable in the cylinder bore (3) in a sealed and sliding manner and which bounds a chamber (5) formed in the cylinder bore (3),

c) an operating device (32) by means of which the master piston (4) can be operated against the force of a return spring (6),

d) a feeding connection (10) which is connected to the chamber (5) and which can be closed off when the master piston (4) is operated,

e) a first receiver outlet (13) which is connected to the chamber (5),
characterised in that

f) the master cylinder (1) has a second receiver outlet (13a),

g) the first and second receiver outlets (13 and 13a) are each connected to the chamber (5) by way of an outlet connection (15 and 15a) formed in the master piston (4),

h) associated with each outlet connection (15 and 15a) there is a closure member (20 and 20a) which blocks this outlet connection (15 and 15a) in the outlet direction under the force of a closing spring (21 and 21a) and/or under the action of the pressure produced in the chamber (5),

    i) associated with each closure member (20 and 20a) there is a pusher (25 and 25a) which is arranged in the master piston (4) so that it is sealed and movable in a sliding manner and by means of which the closure member (20 and 20a) can be moved into the open position,

    j) associated with each pusher (25 and 25a) there is an operating member (29 and 29a), by means of which the pusher (25 and 25a) can be moved until the operating member (29 and 29a) abuts a stop (31 and 31a) formed on the master piston (4),

    k) the operating members (29 and 29a) can be acted upon by the operating device (32) in such a manner that they can be operated individually or together and the master piston (4) can be operated by way of each operating member (29 and 29a) and the stop (31 and 31a) associated therewith.

2. Master cylinder according to claim 1, characterised in that the first and second receiver outlets (13 and 13a) are arranged on the cylinder housing (2) and are each connected by way of a bore (14 and 14a) provided in the cylinder housing (2) to one of the two outlet connections (15 and 15a).

3. Master cylinder according to claim 2, characterised in that the outlet connections (15 and 15a) are each formed by an annular groove (16 and 16a) that is connected to the bore (14 and 14a) in the cylinder housing (2), a cross bore (17 and 17a) that leads into the annular groove (16 and 16a), and a longitudinal bore (18 and 18a) that connects the cross bore (17 and 17a) to the chamber (5).

4. Master cylinder according to claim 3, characterised in that each longitudinal bore (18 and 18a) has at its end nearer the chamber an outwardly stepped end region (19 and 19a) in which the closure member (20 and 20a) is movable and is arranged so that it closes in a sealed manner when it abuts a shoulder (22 and 22a) formed on the step of the end region (19 and 19a) under the action of the pressure produced in the chamber (5) and under the force of the closing spring (21 and 21a).

5. Master cyclinder according to either of claims 1 and 4, characterised in that the closing springs (21 and 21a) are supported at their ends nearer the master piston.

6. Master cylinder according to any one of claims 1, 4 and 5, characterised in that the closure members (20 and 20a) are spherical.

7. Master cylinder according to any one of claims 3 and 4, characterised in that

    a) each longitudinal bore (18 and 18a) has, between the cross bore (17 and 17a) that leads into the annular groove (16 and 16a) and its open end, an outwardly stepped middle region (23 and 23a), in which the pusher (25 and 25a) is arranged,

    b) each pusher (25 and 25a) has at its end nearer the chamber a projection (26 and 26a) in the form of a pin which extends into the longitudinal bore (18 and 18a) and by means of which the closure member (20 and 20a) is movable into the open position against the force of the closing spring (21 and 21a),

    c) each longitudinal bore (18 and 18a) has an outwardly stepped end region (24 and 24a) which adjoins the middle region (23 and 23a) and is flared towards its open end, in which end region the operating member (29 and 29a) is so arranged that it is slidably received and abuts the end of the pusher (25 and 25a) with a contact surface (30 and 30a),

    d) associated with each pusher (25 and 25a) there is a return spring (27 and 27a) which is supported on the one hand on a shoulder (28 and 28a) formed on the step in the middle region (23 and 23a) and on the other hand on the end of the pusher (25 and 25a), which spring holds the unoperated pusher (25 and 25a) in an initial position in which the end of the pusher that abuts the operating member (29 and 29a) extends into the flared end region (24 and 24a),

    e) the stop (31 and 31a) that limits the movement of the operating member (29 and 29a) in the flared end region (24 and 24a) at the pusher end is formed on the step of each flared end region (24 and 24a).

8. Master cylinder according to claim 7, characterised in that the operating members (29 and 29a) are in the form of rods at least in the region in which they extend into the master piston (4) and are rounded in the region of the contact surfaces (30 and 30a) at the pusher end.

9. Master cylinder according to any one of claims 1 to 7, characterised in that each pusher (25 and 25a) is constructed in one piece with the operating member (29 and 29a) associated therewith.

10. Master cylinder according to any one of claims 1 to 9, characterised in that the operating device (32) has a locking member (33) by means of which the operating members (29 and 29a) can be locked together for simultaneous operation.

**Revendications**

1. Maître-cylindre (1) destiné à envoyer du fluide sous pression pour la commande de récepteurs de fluide sous pression, notamment de cylindres de freins d'un véhicule automobile, comprenant :

    a) un corps de cylindre (2) qui présente un unique alésage de cylindre (3) fermé d'un côté,

    b) un piston émetteur (4) qui se déplace en translation dans l'alésage (3) du cylindre à joint étanche et à coulissement et qui limite une chambre (5) formée dans l'alésage (3) du cylindre,

    c) un dispositif d'actionnement (32) à l'aide duquel le piston émetteur (4) peut être actionné à l'encontre de la force d'un ressort de rappel (6),

    d) un raccord de réalimentation (10), communiquant avec la chambre (5) et qui est fermé lors de l'actionnement du cylindre émetteur (4),

    e) une première sortie côté récepteur (13), reliée à la chambre (5),
caractérisé en ce que :

f) le maître-cylindre (1) présente une deuxième sortie côté récepteur (13a),

g) la première et la deuxième sorties côté récepteur (13 et 13a) sont reliées à la chambre (5) chacune par l'intermédiaire d'une liaison de sortie (15 ou 15a respectivement) formée dans le piston émetteur (4),

h) à chaque liaison de sortie (15 et 15a) est associé un organe obturateur (20 ou 20a respectivement) qui ferme cette liaison de sortie (15 ou 15a respectivement) dans le sens de la sortie, sous l'effet de la force d'un ressort de fermeture (21 ou 21a respectivement) et/ou sous l'action de la pression établie dans la chambre (5),

i) à chaque élément obturateur (20 ou 20a), est associé un poussoir (25 ou 25a respectivement) monté pour se déplacer à joint étanche et par coulissement dans le piston émetteur (4), et au moyen duquel l'organe obturateur (20 ou 20a respectivement) peut être amené à sa position d'ouverture,

j) à chaque poussoir (25 ou 25a) respectivement, est associé un organe d'actionnement (29 ou 29a respectivement) avec lequel le poussoir (25 ou 25a respectivement) peut être déplacé en translation jusqu'au moment où l'organe d'actionnement (29 ou 29a respectivement) est en appui contre une butée (31 ou 31a respectivement) formée sur le piston émetteur (4),

k) les organes d'actionnement (29 et 29a) peuvent être sollicités par le dispositif d'actionnement (32) de telle manière que ces organes puissent être actionnés individuellement ou conjointement et que le piston émetteur (4) puisse être actionné par l'intermédiaire de chaque organe d'actionnement (29 ou 29a respectivement) et de la butée (31 ou 31a respectivement qui lui est associée.

2. Maître-cylindre selon la revendication 1, caractérisé en ce que la première et la deuxième sorties côté récepteur (13 et 13a) sont agencées sur le corps (2) du cylindre et sont reliées chacune à l'une des deux liaisons de sortie (15 ou 15a respectivement) par l'intermédiaire d'un perçage (14 ou 14a respectivement) ménagé dans le corps (2) du cylindre.

3. Maître-cylindre selon la revendication 2, caractérisé en ce que les liaisons de sortie (15 et 15a) sont formées chacune par une gorge annulaire (16 ou 16a respectivement) qui est reliée au perçage (14 ou 14a respectivement) du corps (2) du cylindre, un perçage transversal (17 ou 17a) qui débouche dans la gorge annulaire (16 ou 16a respectivement) et un perçage longitudinal (18 ou 18a respectivement) qui relie le perçage transversal (17 ou 17a respectivement) à la chambre (5).

4. Maître-cylindre selon la revendication 3, caractérisé en ce que chaque perçage longitudinal (18 et 18a) présente, côté chambre, une région d'extrémité (19 ou 19a respectivement) qui forme un gradin vers l'extérieur et dans laquelle l'élément obturateur (20 ou 20a respectivement) est monté mobile en translation et formant joint étanche lorsqu'il s'appuie contre un épaulement (22 ou 22a respectivement) formé au gradin de la région d'extrémité (19 ou 19a respectivement) sous l'action de la pression établie dans la chambre (5) et sous l'action de la force du ressort de fermeture (21 ou 21a respectivement).

5. Maître-cylindre selon l'une des revendications 1 et 4, caractérisé en ce que les ressorts de fermeture (21 et 21a) prennent appui sur le piston émetteur.

6. Maître-cylindre selon l'une des revendications 1, 4 et 5, caractérisé en ce que les éléments obturateurs (20 et 20a) sont de forme sphérique.

7. Maître-cylindre selon l'une des revendications 3 et 4, caractérisé en ce que :

a) chaque perçage longitudinal (18 et 18a) présente, entre le perçage transversal (17 ou 17a respectivement) qui y débouche et l'extrémité libre, une région centrale en gradin vers l'extérieur (23 ou 23a respectivement) dans laquelle le poussoir (25 ou 25a respectivement) est disposé,

b) chaque poussoir (25 et 25a) présente, côté chambre un prolongement (26 ou 26a respectivement) en forme de tige qui est engagé dans le perçage longitudinal (18, 18a) et par l'intermédiaire duquel l'élément obturateur (20 ou 20a respectivement) peut être amené en position d'ouverture à l'encontre de la force du ressort de fermeture (21 ou 21a),

c) chaque perçage longitudinal (18 et 18a) présente une région d'extrémité (24 ou 24a respectivement) qui fait suite, en gradin vers l'extérieur, à la région centrale (23 ou 23a respectivement) et qui s'évase en cône vers l'extrémité libre, région dans laquelle l'organe d'actionnement (29 ou 29a respectivement) est engagé mobile en translation et est disposé en appui par une surface de butée (30 ou 30a respectivement), côté frontal, contre le poussoir (25 ou 25a respectivement),

d) à chaque poussoir (25 et 25a) est associé un ressort de rappel (27 ou 27a respectivement) qui prend appui, d'un côté, contre un épaulement (28 ou 28a respectivement) formé au gradin de la région centrale (23 ou 23a respectivement) et, de l'autre côté, côté frontal, contre le poussoir (25 ou 25a respectivement), ressort qui maintient le poussoir non actionné (25 ou 25a respectivement) dans sa position de départ dans laquelle ce poussoir est engagé par son extrémité qui est en appui contre l'organe d'actionnement (29 ou 29a respectivement), dans la région d'extrémité évasée en cône (24 ou 24a respectivement),

e) au gradin de chaque région d'extrémité évasée en cône (24 ou 24a respectivement), est formée la butée (31 ou 31a respectivement) qui limite côté poussoir la mobilité en translation de l'organe d'actionnement (29 ou 29a respectivement) dans la région d'extrémité évasée en cône (24 ou 24a respectivement).

8. Maître-cylindre selon la revendication 7, caractérisé en ce que les organes d'actionnement (29 et 29a) sont en forme de tige au moins dans la région d'attaque du piston émetteur (4) et sont de forme sphérique dans la région des surfaces d'appui (30 et 30a) côté poussoir.

9. Maître-cylindre selon l'une des revendications 1 à 7, caractérisé en ce que chaque poussoir (25 ou 25a) est formé d'une seule pièce avec l'organe d'actionnement (29 ou 29a respectivement) qui lui est associé.

10. Maître-cylindre selon l'une des revendications 1 à 9, caractérisé en ce que le dispositif d'actionnement (32) présente un organe de verrouillage (33) au moyen duquel les organes d'actionnement (29 ou 29a respectivement) peuvent être verrouillés l'un à l'autre pour être actionnés conjointement.